# EUROPEAN PATENT APPLICATION

(11) **EP 4 641 888 A1**
(43) Date of publication of application: **29.10.2025**
(21) Application number: 23909409.7
(22) Date of filing: 26.09.2023
(51) Int. Cl.: H02K 5/20

(54) **HIGH-INTEGRATION MOTOR AND ELECTRONIC CONTROLLER COMBINATION SYSTEM AND AIRCRAFT COMPRISING SAME**

(30) Priority: 25.12.2022 CN 202223467018 U; 25.12.2022 CN 202223463779 U; 25.12.2022 CN 202223463786 U; 25.12.2022 CN 202223463637 U; 28.07.2023 CN 202310937305
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121448
(87) International publication number: WO 2024/139474

(57) **Abstract**

The present invention belongs to the technical field of aircraft, and discloses a highly integrated motor-controller integrated system comprising a motor unit, an electronic controller unit, a connecting member, and a heat dissipation channel. The electronic controller unit is fixedly disposed below the motor unit and controls the motor unit, with a center of the motor unit aligned with a center of the electronic controller unit. The motor unit and the electronic controller unit form the motor-controller integrated system via the connecting member, and the connecting member penetrates the motor unit and the electronic controller unit to connect them in series. A flowing gas dissipates heat from the motor unit and the electronic controller unit by means of the built-in heat dissipation channel passing through the motor-controller integrated system.

## Description

### FIELD OF THE DISCLOSURE

The present invention relates to the field of aircraft, and more specifically, to a highly integrated motor and electronic controller combination system and an aircraft comprising the same.

### BACKGROUND OF THE INVENTION

Current aircraft power systems cannot achieve both lightweight design and excellent heat dissipation. Therefore, improvements are required in the motor unit structure, electronic controller unit structure, and cooling system design, along with optimization of cooling air ducts. These enhancements enable a highly integrated motor-controller structure with efficient thermal management while achieving increased output power and reduced self-weight. Additionally, they eliminate the need for extra components and water cooling systems, significantly enhancing the reliability of the power system.

### SUMMARY OF THE INVENTION

The objective of the present invention is to provide a highly integrated motor and electronic controller combination system and an aircraft comprising the same.

To achieve this objective, the present invention adopts the following technical solutions:
The present invention provides a highly integrated motor and electronic controller combination system, comprising:
a motor unit;
an electronic controller unit, wherein the electronic controller unit is fixably arranged below the motor unit and controls the motor unit, and a center of the motor unit is aligned with a center of the electronic controller unit;
a connecting member, wherein the motor unit and the electronic controller unit form the highly integrated motor and electronic controller combination system through the connecting member, and the connecting member penetrates through the motor unit and the electronic controller unit to connect them; and
a heat dissipation channel, wherein a gas flows through the heat dissipation channel, which is built through the highly integrated motor and electronic controller combination system, to cool down the motor unit and the electronic controller unit.

Preferably, the motor unit comprises:
a rotor, wherein the rotor is placed within a housing of the motor unit, and a first heat dissipation channel is formed between the housing and the rotor.

Preferably, the first heat dissipation channel comprises:
gas from outside the housing moves to the electronic controller unit, then enters an interface between the rotor and the housing, flows along a direction parallel to a rotation central axis to an outer peripheral gap between the housing and the rotor, and subsequently, the gas is discharged from the housing after absorbing heat.

Preferably, the motor unit comprises:
a stator, wherein the stator is oppositely arranged to the rotor and is rotatably connected;
   and,
a bearing sleeve, wherein the stator is sleeved on the bearing sleeve.

Preferably, further comprising:
a centrifugal fan arranged at a top of the motor unit and the electronic controller unit, wherein a center of the centrifugal fan is aligned with the center of the motor unit; and
wherein the centrifugal fan generates negative pressure at an air inlet of the heat dissipation channel to improve an air intake capability of the heat dissipation channel.

Preferably, a second heat dissipation channel is formed between the stator, the bearing sleeve, and the centrifugal fan.

Preferably, the second heat dissipation channel comprises:
gas from outside the housing moves to the electronic controller unit, then enters an interface between the rotor and the housing, flows along a direction perpendicular to the rotation central axis to an end of the stator near the bearing sleeve, subsequently flows along a direction parallel to the rotation central axis between the stator and the bearing sleeve, and finally, the gas is discharged through the centrifugal fan after absorbing heat.

Preferably, the heat dissipation channel comprises a first heat dissipation channel and a second heat dissipation channel, and by gas from outside the housing, after passing through the first heat dissipation channel and the second heat dissipation channel, a dual heat dissipation for the highly integrated motor and electronic controller combination system results.

Preferably, the gas flow is generated by a propeller and/or the centrifugal fan.
To achieve this objective, the present invention further adopts the following technical solutions: An aircraft, comprising the highly integrated motor and electronic controller combination system as described above, wherein the highly integrated motor and electronic controller combination system is arranged on an aircraft arm, and the aircraft arm is provided with an opening for receiving a propeller-generated airflow.
The beneficial effects of the present invention are as follows: The highly integrated motor and electronic controller combination system modularizes the production and the assembly of the motor and of the electronic controller, reducing structural damage to the aircraft, improving production efficiency, and lowering costs. Additionally, the dual heat dissipation channels integrated within the system provide comprehensive cooling: one channel utilizes propeller-pressurized airflow through the first heat dissipation channel to cool the rotor, while the other channel utilizes the second heat dissipation channel formed by gaps between the stator and bearing sleeve and between the rotor and stator. Staggered long and short heat dissipation fins on the bearing sleeve further enhance cooling efficiency. This dual-channel design reduces the temperature of the control unit by 20%, while simultaneous internal and external cooling of the motor via both channels lowers motor temperature by 10%.

### BRIEF DESCRIPTION OF DRAWINGS

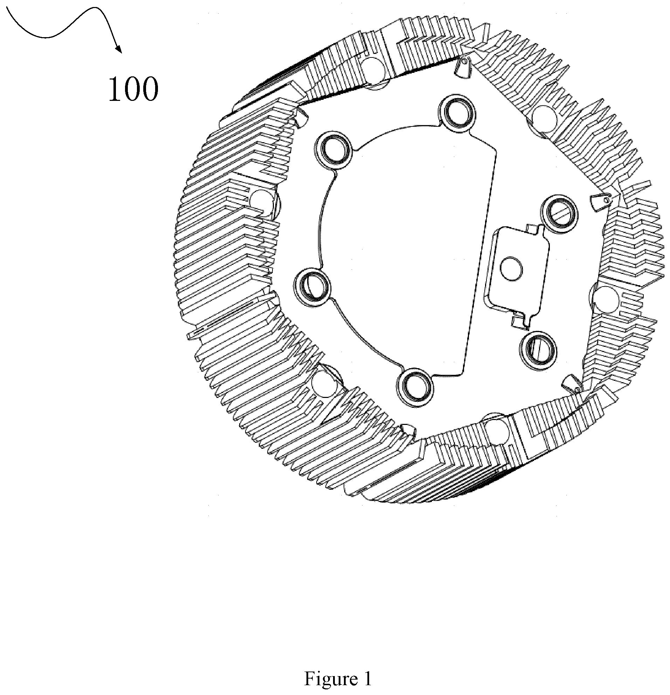

Fig. 1 is a schematic diagram of the motor unit of the highly integrated motor and electronic controller combination system of the present invention;

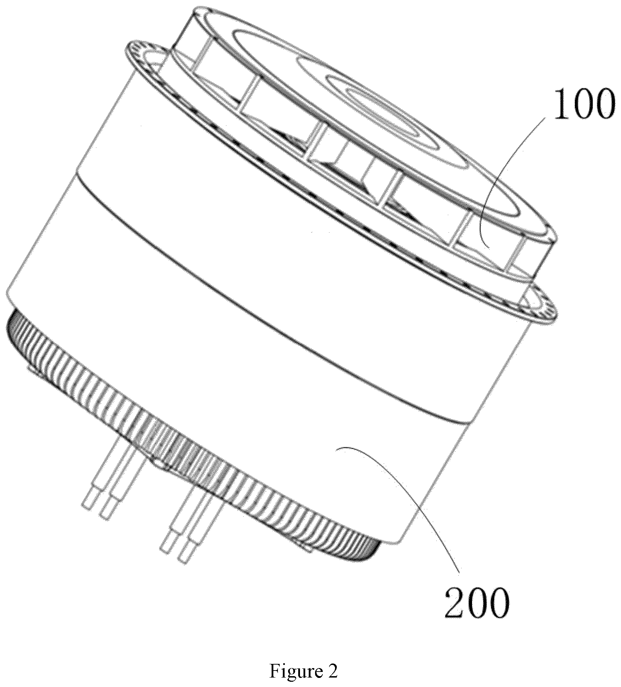

Fig. 2 is a schematic diagram of the highly integrated motor and electronic controller combination system of the present invention;

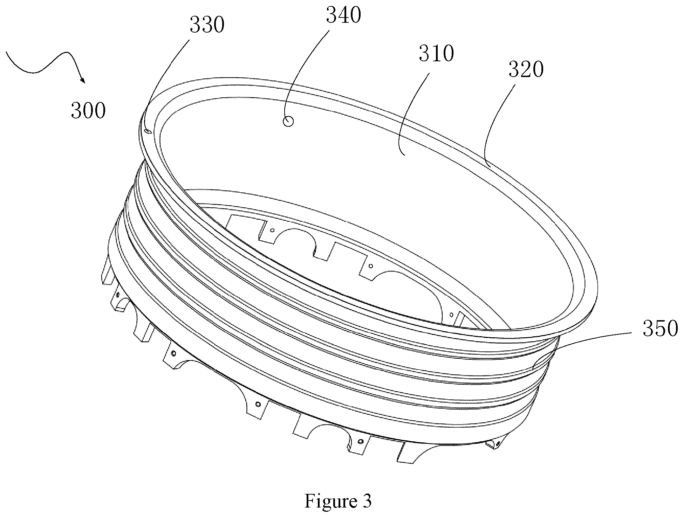

Fig. 3 is a schematic diagram of the connecting member of the present invention;

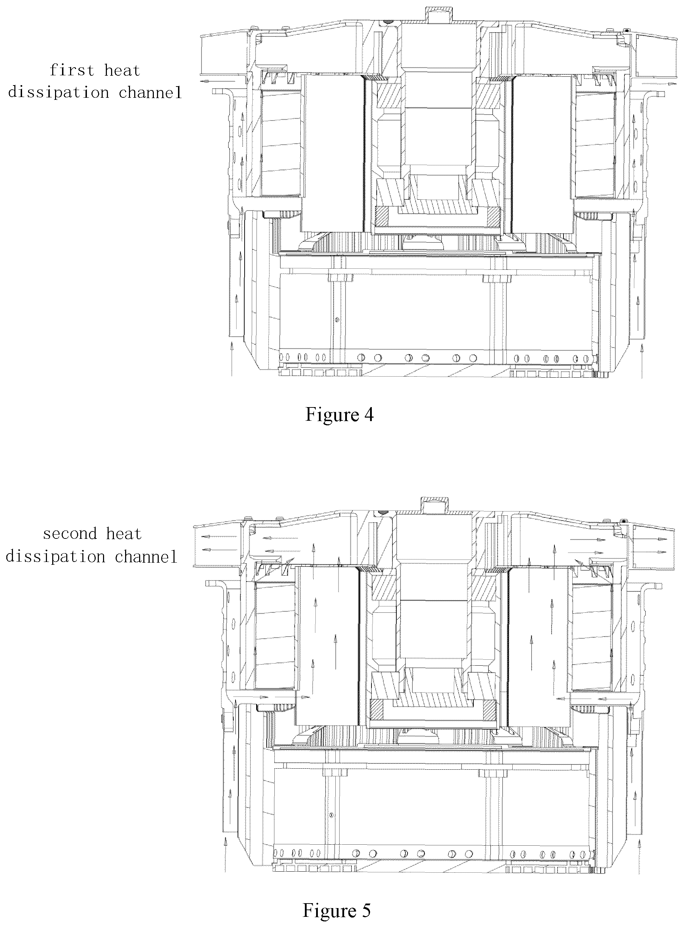

Fig. 4 is a schematic diagram of the first heat dissipation channel of the present invention;
Fig. 5 is a schematic diagram of the second heat dissipation channel of the present invention;

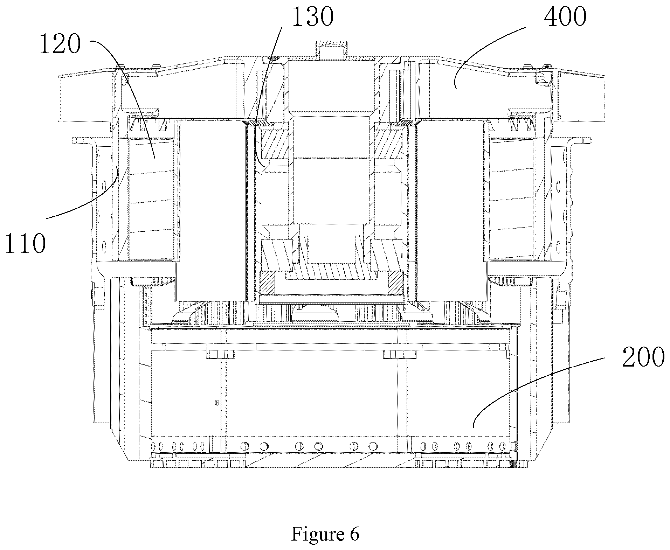

Fig. 6 is an overall schematic diagram of the heat dissipation channel of the highly integrated motor and electronic controller combination system of the present invention.

### DETAILED DESCRIPTION

To clarify the objectives, technical solutions, and advantages of the present invention, various embodiments will be described in detail below with reference to the accompanying drawings. However, those of ordinary skill in the art may understand that many technical details are set forth in the embodiments of the present invention to enable readers to better understand the present invention. Nevertheless, even without these technical details and various modifications based on the following embodiments, the technical solutions claimed in the claims of the present invention may be implemented.

Unless the context clearly requires otherwise, throughout the specification and claims, the words "comprise", "comprising", and variations such as "include" or "having" are to be construed in an open, inclusive sense, that is, as meaning "including but not limited to".

The embodiments of the present invention will be described in detail below with reference to the accompanying drawings to provide a clearer understanding of the objectives, features, and advantages of the present invention. It should be understood that the embodiments shown in the drawings are not intended to limit the scope of the present invention but are provided solely to illustrate the substantive content of the technical solutions of the present invention.

References throughout the specification to "one embodiment" or "an embodiment" mean that a specific feature, structure, or characteristic described in connection with the embodiment is included in at least one embodiment. Thus, appearances of the phrases "in one embodiment" or "in an embodiment" in various places throughout the specification are not necessarily all referring to the same embodiment. Furthermore, specific features, structures, or characteristics may be combined in any suitable manner in one or more embodiments.

The singular forms "a", "an", and "the" as used in this specification and the appended claims include plural references unless the context clearly dictates otherwise. It should be noted that the term "or" is generally used in its inclusive sense meaning "and/or" unless the context clearly dictates otherwise.

In the following description, directional terms such as "front", "rear", "left", "right", "outer", "inner", "outward", "inward", "up", and "down" are used for clarity in illustrating the structure and operation of the present invention. These terms should be understood as convenient expressions and not as limiting terms.

A first embodiment of the present invention provides a highly integrated motor and electronic controller combination system, comprising a motor unit 100, an electronic controller unit 200, a connecting member, and a heat dissipation channel. The electronic controller unit 200 is fixedly disposed below the motor unit 100 and controls the motor unit 100, with the center of the motor unit 100 aligned with the center of the electronic controller unit 200. The motor unit 100 and the electronic controller unit 200 form the highly integrated motor and electronic controller combination system via the connecting member, with the connecting member passing through the motor unit 100 and the electronic controller unit 200 to connect them in series. A flowing gas dissipates heat from the motor unit 100 and the electronic controller unit 200 through a built-in heat dissipation channel penetrating the highly integrated motor and electronic controller combination system.

Further, the highly integrated motor and electronic controller combination system of the present invention comprises a fixing structure 300. The fixing structure 300 is sleeved outside the motor unit 100, and the motor unit 100 and the electronic controller unit 200 are fixedly connected to an aircraft arm via the fixing structure 300. The fixing structure 300 comprises a cylindrical barrel 310 and an edge extension portion 320. The edge extension portion 320 is connected to the cylindrical barrel 310 and located above the cylindrical barrel 310. The junction of the edge extension portion 320 and the cylindrical barrel 310 extends radially outward relative to the barrel 410.

Preferably, the edge extension portion 320 is provided with a plurality of uniformly spaced through holes 330 for connecting to an unmanned aerial vehicle (UAV) arm. Illustratively, the number of through holes 330 is 48, each with a diameter between 4.8 mm and 5.2 mm.

Further, a plurality of weight reduction holes 340 is formed on the side of the cylindrical barrel 310 to reduce weight. A plurality of reinforcing ribs 350 is fixedly disposed on the outer side of the cylindrical barrel 310 to enhance its load-bearing capacity.

Further, the motor unit 100 comprises a rotor 110 housed within the motor unit's housing. A first heat dissipation channel is formed by a gap between the housing and the rotor 110. Specifically, the first heat dissipation channel comprises:
external gas moves to the electronic controller unit 200, enters the interface between the rotor 110 and the housing, moves upward along a direction parallel to the rotation central axis towards an outer peripheral gap between the housing and the rotor 110, absorbs heat, and is then discharged from the housing.

Further, the motor unit 100 comprises a stator 120 and a bearing sleeve 130. The stator 120 is arranged opposite and rotatably connected to the rotor 110, and the stator 120 is sleeved on the bearing sleeve 130.

Further, the highly integrated motor and electronic controller combination system of the present invention further comprises a centrifugal fan 400. The centrifugal fan 400 is disposed at the top of the motor unit 100 and the electronic controller unit 200, with its center aligned with the center of the motor unit 100. To enhance the air intake capacity of the heat dissipation channel, the centrifugal fan 400 is configured to generate negative pressure at the air inlet of the heat dissipation channel.

Notably, a second heat dissipation channel in the present invention is formed by the stator 120, the bearing sleeve 130, and the centrifugal fan 400.

Specifically, the second heat dissipation channel comprises: external gas moves to the electronic controller unit 200, enters the interface between the rotor 110 and the housing, moves along a direction perpendicular to the rotation central axis to an annular end face of the stator 120 near the bearing sleeve 130, then flows along a direction parallel to the rotation central axis through a gap between the stator 120 and the bearing sleeve 130, absorbs heat, and is discharged via the centrifugal fan 400.

Further, a plurality of heat dissipation fins arranged longitudinally in a staggered manner is disposed inside the bearing sleeve 130 of this embodiment. These longitudinally staggered heat dissipation fins form heat dissipation zones with each other to enhance the heat dissipation efficiency of the second heat dissipation channel.

Moreover, the heat dissipation fins comprise long heat dissipation fins and short heat dissipation fins. The long heat dissipation fins are connected to the outer wall of the bearing sleeve 130, and the short heat dissipation fins are connected to the inner wall of the bearing sleeve 130. The long and short heat dissipation fins are alternately and spacedly arranged.

Of course, since a gap exists between the rotor 110 and the stator 120, after airflow passes through the second heat dissipation channel to the electronic controller unit 200, it enters the interface between the rotor 110 and the housing, flows along a direction parallel to the rotation central axis through the gap between the rotor 110 and the stator 120, absorbs heat, and is finally discharged through the centrifugal fan 400.

Further, the heat dissipation channel comprises the first heat dissipation channel and the second heat dissipation channel. Gas from outside the housing achieves dual heat dissipation of the highly integrated motor and electronic controller combination system after passing through the first and second heat dissipation channels.

Illustratively, the gas flow in the highly integrated motor and electronic controller combination system of the present invention is generated by a propeller and/or the centrifugal fan 400. Additionally, in this embodiment, the centrifugal fan 400 has a plurality of blades. The blades are arc-shaped and spaced apart sequentially, thereby increasing the linear velocity of the centrifugal fan's processing area and enhancing its heat dissipation function.

To improve the air intake capacity of the second heat dissipation channel, the propeller is designed to generate positive pressure at the air inlet during operation, while the centrifugal fan 400 generates negative pressure at the air inlet.

A second embodiment of the present invention provides an aircraft, comprising the highly integrated motor and electronic controller combination system as described in the above solution. The highly integrated motor and electronic controller combination system is mounted on an arm of the aircraft, and the arm is provided with an opening for receiving a propeller-generated airflow.

The above embodiments are illustrative of the principles and efficacy of the present invention and are not intended to limit the application. Any person skilled in the art may modify or alter the above embodiments without departing from the scope of the application. Therefore, all equivalent modifications or alterations made by those of ordinary skill in the art without departing from the spirit of the present invention shall remain covered by the claims of the present invention.

## Claims

1. A highly integrated motor and electronic controller combination system, comprising:
a motor unit;
an electronic controller unit, wherein the electronic controller unit is fixably arranged below the motor unit and controls the motor unit, and a center of the motor unit is aligned with a center of the electronic controller unit;
a connecting member, wherein the motor unit and the electronic controller unit form thehighly integrated motor and electronic controller combination system through the connecting member, and the connecting member penetrates through the motor unit and the electronic controller unit to connect them; and
a heat dissipation channel, wherein a gas flows through the heat dissipation channel which is built through the highly integrated motor and electronic controller combination system, to cool down the motor unit and the electronic controller unit.

2. The highly integrated motor and electronic controller combination system as claimed in claim 1, **characterized in that** the motor unit comprises:
a rotor, wherein the rotor is placed within a housing of the motor unit, and a first heat dissipation channel is formed between the housing and the rotor.

3. The highly integrated motor and electronic controller combination system as claimed in claim 2, **characterized in that** the first heat dissipation channel comprises:
gas from outside the housing moves to the electronic controller unit, then enters an interface between the rotor and the housing, flows along a direction parallel to a rotation central axis to an outer peripheral gap between the housing and the rotor, and subsequently, the gas is discharged from the housing after absorbing heat.

4. The highly integrated motor and electronic controller combination system as claimed in claim 2, **characterized in that** the motor unit comprises:
a stator, wherein the stator is oppositely arranged to the rotor and is rotatably connected;
and,
a bearing sleeve, wherein the stator is sleeved on the bearing sleeve.

5. The highly integrated motor and electronic controller combination system as claimed in claim 4, further comprising:
a centrifugal fan arranged at a top of the motor unit and the electronic controller unit, wherein a center of the centrifugal fan is aligned with the center of the motor unit; and
wherein the centrifugal fan generates negative pressure at an air inlet of the heat dissipation channel to improve an air intake capability of the heat dissipation channel.

6. The highly integrated motor and electronic controller combination system as claimed in claim 5, **characterized in that** a second heat dissipation channel is formed between the stator, the bearing sleeve, and the centrifugal fan.

7. The highly integrated motor and electronic controller combination system as claimed in claim 6, **characterized in that** the second heat dissipation channel comprises:
gas from outside the housing moves to the electronic controller unit, then enters an interface between the rotor and the housing, flows along a direction perpendicular to the rotation central axis to an end of the stator near the bearing sleeve, subsequently flows along a direction parallel to the rotation central axis between the stator and the bearing sleeve, and finally, the gas is discharged through the centrifugal fan after absorbing heat.

8. The highly integrated motor and electronic controller combination system as claimed in claim 1, **characterized in that** the heat dissipation channel comprises a first heat dissipation channel and a second heat dissipation channel, and by gas from outside the housing, after passing through the first heat dissipation channel and the second heat dissipation channel, a dual heat dissipation for the highly integrated motor and electronic controller combination system results.

9. The highly integrated motor and electronic controller combination system as claimed in claim 1, **characterized in that** the gas flow is generated by a propeller and/or the centrifugal fan.

10. An aircraft, comprising the highly integrated motor and electronic controller combination system as claimed in any one of claims 1-9, wherein the highly integrated motor and electronic controller combination system is arranged on an aircraft arm, and the aircraft arm is provided with an opening for receiving a propeller-generated airflow.
